# EUROPEAN PATENT APPLICATION

(11) **EP 0 955 714 A2**
(43) Date of publication of application: **10.11.1999**
(21) Application number: 99660069.8
(22) Date of filing: 29.04.1999
(51) Int. Cl.: H02K 1/27, H02K 21/02

(54) **Permanent magnet synchronous machine**

(30) Priority: 04.05.1998 FI 980980
(71) Applicant: ABB Motors Oy, 65320 Vaasa (FI)
(72) Inventor: Pyrhönen, Juha, 53850 Lappeenranta (FR); Haring, Tapio, 65370 Vaasa (FR)
(74) Representative: Peltonen, Antti Sakari

(57) **Abstract**

A permanent magnet synchronous machine comprising a stator (11) and a rotor (12), which in turn comprises a rotor sheet pack laminated from hot plates, the sheets of the pack being provided with openings which form cavities in the sheet pack, and permanent magnets (13) placed in the cavities of the rotor sheet pack. According to the invention, the shape of the outer circumference (14) of the rotor sheets and the location and cross-sectional shape of the permanent magnets (13) are adapted to each other such that the air gap flux density in an air gap (15) between the stator (11) and the rotor (12) of the machine varies substantially sinusoidally.

## Description

### FIELD OF THE INVENTION

The invention relates to a permanent magnet synchronous machine comprising a stator and a rotor, which in turn comprises a rotor sheet pack laminated from hot plates, the sheets of the pack being provided with openings which form cavities in the sheet pack, and permanent magnets placed in the cavities of the rotor sheet pack.

A permanent magnet synchronous machine is an interesting alternative to replace a squirrel-cage induction machine and a gear system in slow speed drives. In such a case, the permanent magnet synchronous machine must be provided with multiple poles, which results in a small number of slots per phase and pole for the machine. The number of slots may typically be, for example, q = 1. Therefore, a flux produced by the stator comprises a great number of harmonics. If the permanent magnets of the machine are positioned such that a flux produced by the magnets alone in an air gap between the stator and the rotor differs from sinusoidal, disadvantageous harmonic oscillations will occur in the electric torque of the machine when sinusoidal currents are supplied to the machine. A motor control system provided with an intelligent control is able to take into account such factors that are dependent on the non-linearity of the motor. However, if the arrangement is to be inexpensive, it should be noted that a higher calculation capacity of the motor control system always increases the costs.

As regards control technology in multipolar machines, it would be most preferable to manufacture the rotor of the machine such that the flux produced by the motor magnets would be sinusoidal in the air gap. This is possible by means of a technique that is known, for example, from servomachines, where permanent magnets are placed on the rotor surface and the magnets themselves are formed so as to produce a sinusoidal field. Such an arrangement is known, for example, from US Patent 4,748,359.

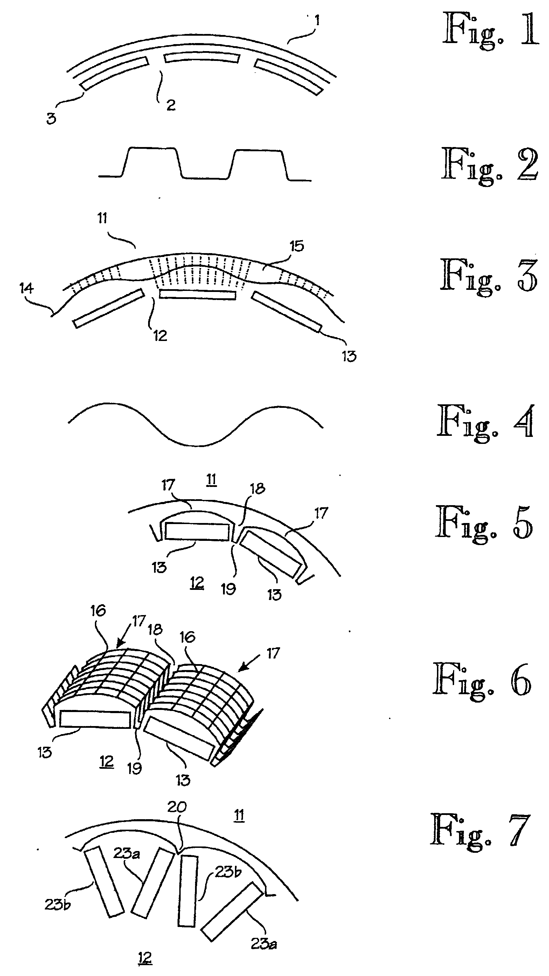

However, several manufacturers try to use, as far as possible, structures that are known from the manufacture of asynchronous machines to produce permanent magnet synchronous machines. This often leads to the use of a rotor structure laminated from a hot plate in the machine, the structure comprising punched grooves to which the permanent magnets are fitted. In such a case, the air gap of the machine is physically constant but magnetically asymmetrical. Such a conventional arrangement is shown for example in Figure 1 of the accompanying drawing, where a rotor sheet pack 2 with a cylindrical outer circumference is provided with cavities where permanent magnets 3 with a rectangular cross-section are fitted. An air gap formed between the rotor 2 and the stator 1 is then of even width. However, the magnetic flux density in this air gap is uneven and corresponds to the square waveform shown in Figure 2. Due to such a waveform of the air gap flux density, so-called tooth torques will occur in the machine, as well as torques produced by both winding harmonics and rotor flux harmonics. Further, due to a relatively high transverse inductance of the machine, the machine operates with a great power angle. One possible manner of solving these problems is to divide the rotor pack into several segments so that the tooth torque is reduced but not completely eliminated unless the permanent magnets can be placed diagonally with respect to the rotor shaft, which is rather difficult in practice. This arrangement also facilitates the decrease of other harmonics, but it further increases the price of the machine.

### SUMMARY OF THE INVENTION

The purpose of the present invention is to provide a permanent magnet synchronous machine in which the permanent magnets are placed in the cavities of the rotor sheet pack in the above-described manner, but which comprises none of the aforementioned problems. The purpose is to provide a permanent magnet synchronous machine which can be manufactured by applying structural solutions that are known from the production of asynchronous machines. This is achieved by means of a permanent magnet synchronous machine according to the invention, which is characterized in that the shape of the outer circumference of the rotor sheets and the cross-sectional shape of the permanent magnets are adapted to each other such that the air gap flux density in an air gap between the stator and the rotor of the machine varies substantially sinusoidally.

According to a preferred embodiment of the invention, the permanent magnets have a substantially rectangular cross-section and they are placed substantially tangentially with respect to the rotor shaft. The sheets of the rotor sheet pack may be connected together by means of welded joints formed at the outer circumference of the rotor, the joints being parallel to the rotor shaft. There is preferably at least one welded joint at each rotor pole. In addition to holding the rotor sheet pack together, the welded joints also constitute a damper winding. When a desired number of welded joints of a desired width are formed in the rotor, the machine can be provided with a desired number of damper bars of a desired width.

According to an embodiment, the waveform of the outer circumference of each rotor sheet resembles a sine curve when spread onto a plane, the peaks of the curve being situated at the rotor poles. The rotor may also comprise a housing with a cylindrical outer surface, placed on the rotor sheet pack and made of an electrically conductive, non-magnetic material. This housing, which in practice may be for example an aluminium or copper alloy layer comprising a cylindrical outer surface and cast on a wavy dynamo sheet, is used as a squirrel-cage or damper winding, enabling thus for example asynchronous start-up.

According to another embodiment, the outer circumference of the rotor comprises teeth, which means that each tooth at the rotor's outer circumference forms one rotor pole and comprises at least one permanent magnet placed such that the surface of the magnet on the side of the rotor shaft is substantially on the same level with a bottom of a groove situated between the teeth. In such a case, the part connecting the magnets is thin and long, whereupon the magnetic short circuit will be weaker and less material is needed for the magnets.

According to yet another embodiment, the cross-sectional shape of the permanent magnets is substantially rectangular and the magnets are placed diagonally with respect to the rotor circumference, such that each rotor pole comprises two permanent magnets placed in the shape of an A with respect to one another, the peak of the A being situated at the pole centre and the circumference of the rotor comprising a shallow V-shaped groove at this peak. In this manner, the peak value of the air gap flux density can be increased with respect to a rotor provided with tangential magnets, thus increasing the machine constant.

### LIST OF FIGURES

The permanent magnet synchronous machine according to the invention will be described below in greater detail with reference to the accompanying drawing, in which
Figure 1 shows schematically a part of a rotor and a stator in a prior art permanent magnet synchronous machine,
Figure 2 shows a waveform of the air gap flux density in the permanent magnet synchronous machine of Figure 1,
Figure 3 shows schematically a part of a stator and a rotor in a permanent magnet synchronous machine according to a first embodiment of the invention,
Figure 4 shows a waveform of the air gap flux density in the permanent magnet synchronous machine of Figure 3,
Figure 5 shows schematically a part of a stator and a rotor in a permanent magnet synchronous machine according to a second embodiment of the invention,
Figure 6 is a perspective view of the part shown in Figure 5, and
Figure 7 shows schematically a part of a stator and a rotor in a permanent magnet synchronous machine according to a third embodiment of the invention.

### DETAILED DESCRIPTION OF THE INVENTION

Figure 3 shows schematically a part of a rotor and a stator in a permanent magnet synchronous machine according to a first embodiment of the invention. In the figure, the stator is denoted by reference numeral 11 and the rotor by reference numeral 12. The rotor 12 consists of a rotor sheet pack laminated from hot plates. Each sheet of the rotor sheet pack is provided with openings at the intended rotor poles, and these openings are aligned in the sheet pack so as to form cavities passing through the rotor in the axial direction thereof. Permanent magnets 13 are placed in the cavities. The cross-sectional shape of the magnets is rectangular in the exemplary embodiment of Figure 3. Correspondingly, in the exemplary embodiment of Figure 3 the waveform of the outer circumference of the rotor sheet pack is substantially a sine curve when spread on a plane, or at least it resembles a sine curve the peaks of which are situated at the rotor poles, i.e. at the centres of the permanent magnets 13. As shown in Figure 3, the permanent magnets 13 with a substantially rectangular cross-section are situated tangentially with respect to the centre of the rotor.

The basic idea of the permanent magnet synchronous machine according to the invention is that the shape of an outer circumference 14 of the rotor sheets and the cross-sectional shape of the permanent magnets 13 are adapted to each other such that the air gap magnetic flux density in an air gap 15 between the stator 11 and the rotor 12 varies substantially sinusoidally in the circumferential direction of the rotor. This waveform illustrated in Figure 4 is substantially a sine curve the peaks of which are situated in each case at the centre of the rotor pole, which in the embodiment of Figure 3 means in the middle of the permanent magnet 13.

As disclosed above, the basic idea of the invention is to provide a desired sinusoidal waveform for the air gap flux density by mutually shaping the sheets of the rotor sheet pack and the permanent magnets placed in the openings of the pack. It is then possible to utilize manufacturing techniques used for short-circuit machines, wherefore the manufacture is simple and economical.

The arrangement shown in Figure 3 is possibly the simplest implementation of the invention since in this embodiment the permanent magnets are flat pieces with a rectangular cross-section.

The permanent magnet synchronous machine of Figure 3 can be further improved by placing a housing with a cylindrical outer surface on the wavy dynamo sheet pack of the rotor, the housing being made of an electrically conductive, non-magnetic material. In practice, this can be implemented for example by casting an aluminium or copper alloy layer with a cylindrical outer surface on the dynamo sheet pack. Such a housing with a cylindrical outer surface, made of an electrically conductive, non-magnetic material, is used as a squirrel-cage and damper winding, enabling thus for example asynchronous start-up. When the permanent magnet synchronous machine according to the invention is provided with such a housing, it can be started directly from the electric network in the same manner as an asynchronous machine.

Figures 5 and 6 show schematically a part of a rotor and a stator in a permanent magnet synchronous machine according to a second embodiment of the invention. In these figures, too, the rotor is denoted by reference numeral 12 and the stator by reference numeral 11. Also in this embodiment, the permanent magnets 13 have a substantially rectangular cross-sectional shape and they are placed substantially tangentially with respect to the rotor shaft. The sheets of the rotor sheet pack are connected together by means of welded joints 16 which are formed at the outer circumference of the rotor and which are parallel to the rotor shaft or, as shown in Figure 6, which are slightly diagonal with respect to the rotor shaft. There is preferably at least one welded joint at each rotor pole. In addition to holding the rotor sheet pack together, the welded joints 16 also constitute a damper winding. When a desired number of welded joints of a desired width are formed in the rotor, the machine can be provided with a desired number of damper bars of a desired width. This can be achieved easily by means of modern welding techniques. Damping is advantageous since it prevents air gap harmonics from getting into the rotor, whereupon the distortive effect of the armature reaction on the flux density waveform does not produce the same number of torque harmonics as in a machine with no damping. The damping also increases the reaction speed of the machine, If desired, a torque increases more rapidly in a machine with damping than in a machine with no damping.

In the rotor shown in Figures 5 and 6, the outer circumference of the rotor 12 comprises teeth such that each tooth 17 at the rotor's outer circumference forms one rotor pole and comprises one permanent magnet 13 placed such that the surface of the magnet on the side of the rotor shaft is substantially on the same level with a bottom 19 of a groove 18 situated between the teeth 17. In such a case, the part connecting the magnets is thin and long, whereupon the magnetic short circuit will be weaker and less material is needed for the magnets. Further, the outer circumference of each rotor tooth is similar to a circular arc.

In the embodiment shown in Figures 5 and 6, each motor pole comprises one permanent magnet, but in the manufacture of larger machines it may be more advantageous to place at each pole several permanent magnets situated in parallel in their own cavities. Also, the permanent magnets are preferably made of several permanent magnet parts placed one after another in the axial direction of the machine. Such structural solutions result from the problems related to the manufacture of the material for permanent magnets in the production of larger permanent magnets.

Figure 7 shows schematically a part of a rotor and a stator in a permanent magnet synchronous machine according to a third embodiment of the invention. In this figure, too, the rotor is denoted by reference numeral 12 and the stator by reference numeral 11. Also in this embodiment, the cross-sectional shape of the permanent magnets 23a and 23b is substantially rectangular, but the magnets are now placed in an oblique position. The permanent magnets 23a and 23b are placed diagonally with respect to the rotor circumference such that each rotor pole comprises two permanent magnets 23a and 23b placed in the shape of an A with respect to each other, the peak of the A being situated in the middle of the pole. The circumference of the rotor, in turn, comprises at the peak a shallow V-shaped groove 20. In this manner, the peak value of the air gap flux density can be increased compared to a rotor provided with tangential magnets, thus increasing the machine constant.

The basic idea of the invention concerning sinusoidally varying air gap flux density can be implemented with a suitable combination of the circumferential shape of the rotor sheet pack and the shape and location of the permanent magnets, also when the magnets are placed diagonally with respect to the rotor shaft. Such a diagonal position can be achieved by cutting the magnetic rods into rather short sections of a few centimetres, for example, and by maintaining a sufficient tolerance in the cavities of the rotor sheet pack. By means of the groove inclination of the stator, the power of the fifth and the seventh stator harmonic can be made as low as possible. In practice, groove inclination of approximately one stator groove pitch dampens rather well the lowest harmonics of the stator in machines where the number of slots is q=1. The groove inclination also eliminates the remaining problems with tooth torques.

The essential feature of the permanent magnet synchronous machine according to the invention is that the permanent magnets are placed in the cavities of the stator sheet pack, wherefore they can be fastened in a very simple manner. In the machine according to the invention, the permanent magnets can also be mounted easily. By applying a suitable tolerance and an adhesive as a slip agent between the openings cut in the sheets of the rotor sheet pack and the permanent magnets, the magnet pieces can be made to slide into the rotor cavities almost effortlessly. For example with magnets to be placed on the surface of steel, the mounting is difficult due to the high attractive force acting on the magnet.

The cross-sectional shapes of the permanent magnets may naturally also differ from those of the embodiments shown in Figures 3 to 7, but in such a case the waveform of the outer circumference of the rotor sheet pack must be changed correspondingly in order that the sinusoidal waveform of the air gap flux density can be maintained. The essential feature is that the desired waveform of the air gap flux density is achieved by shaping the circumference of the sheets in the rotor sheet pack and not by shaping the permanent magnets. In practice, when the sheets of the stator sheet pack are manufactured for example through punching, the desired waveform of the circumference can be provided in a very simple manner. On the other hand, it is substantially more difficult to shape the permanent magnets.

Since it is possible to achieve a sinusoidal magnetic flux distribution in the air gap in the permanent magnet synchronous machine according to the invention, the control and adjustment of the machine can be implemented far more easily and losses in the machine can be decreased compared to the permanent magnet synchronous machines where the waveform of the air gap flux density differs from sinusoidal. When the machine has a structure where the rotor magnets produce a sinusoidal field in the air gap, harmonic torques resulting from the machine structure do not occur in the machine to the same extent as in a machine with a different structure. The transverse air gap of the machine can also be increased and the transverse inductance can be decreased such that the power angle of the machine becomes smaller during the operation thereof. The permanent magnet synchronous machine according to the invention can also be controlled directly with a Direct Torque Control® frequency converter manufactured by ABB Industry.

The permanent magnet synchronous machine according to the invention is described above by means of only a few exemplary embodiments, and it should be understood that it can be modified to some extent without deviating from the scope of protection defined in the appended claims, however. The basic feature in the permanent magnet synchronous machine according to the invention is that the shape of the air gap between the stator and the rotor is selected optimally, which means that in practice the air gap between the stator and the magnetic part of the rotor, in other words the rotor sheet pack, is such that the waveform of the air gap flux density occurring therein is a sine curve. Another basic feature of the permanent magnet synchronous machine according to the invention is that it can be manufactured by utilizing similar techniques as in the manufacture of short-circuit machines.

## Claims

1. A permanent magnet synchronous machine comprising a stator (11) and a rotor (12), which in turn comprises a rotor sheet pack laminated from hot plates, the sheets of the pack being provided with openings which form cavities in the sheet pack, and permanent magnets (13) placed in the cavities of the rotor sheet pack, **characterized** in that the shape of the outer circumference (14) of the rotor sheets and the location and cross-sectional shape of the permanent magnets (13) are adapted to each other such that the air gap flux density in an air gap (15) between the stator (11) and the rotor (12) of the machine varies substantially sinusoidally.

2. A permanent magnet synchronous machine according to claim 1, **characterized** in that the cross-sectional shape of the permanent magnets (13) is substantially rectangular, and that the magnets are placed substantially tangentially with respect to the rotor shaft.

3. A permanent magnet synchronous machine according to claim 2, **characterized** in that the sheets of the rotor sheet pack are connected together with welded joints (16) which are formed at the outer circumference of the rotor and which are parallel to the rotor shaft.

4. A permanent magnet synchronous machine according to claim 3, **characterized** in that there is at least one welded joint (16) at each rotor pole.

5. A permanent magnet synchronous machine according to claim 1 or 2, **characterized** in that the waveform of the outer circumference (14) of each rotor sheet when spread on a plane is substantially a sine curve the peaks of which are situated at the rotor poles.

6. A permanent magnet synchronous machine according to claim 5, **characterized** in that the rotor also comprises a housing with a cylindrical outer surface, placed on the rotor sheet pack and made from an electrically conductive, non-magnetic material.

7. A permanent magnet synchronous machine according to claim 6, **characterized** in that the housing with a cylindrical outer surface placed on the rotor sheet pack is an aluminium or copper alloy layer cast on the rotor sheet pack.

8. A permanent magnet synchronous machine according to claim 1 or 2, **characterized** in that the outer circumference of the rotor comprises teeth, that each tooth (17) at the rotor's outer circumference forms one rotor pole and comprises at least one permanent magnet (13) placed such that the surface of the magnet on the side of the rotor shaft is substantially on the same level with a bottom (19) of a groove (18) situated between the teeth (17).

9. A permanent magnet synchronous machine according to claim 8, **characterized** in that the outer circumference of each rotor tooth (17) has the shape of a circular arc.

10. A permanent magnet synchronous machine according to claim 1, **characterized** in that the cross-sectional shape of the permanent magnets (23a, 23b) is substantially rectangular and that the permanent magnets (23a, 23b) are placed diagonally with respect to the rotor circumference such that each rotor pole comprises two permanent magnets (23a, 23b) placed in the shape of an A with respect to one other, the peak of the A being situated in the middle of the pole, and that the rotor circumference at the peak comprises a shallow V-shaped groove (20).
